# EUROPÄISCHE PATENTSCHRIFT

(11) **EP 2 169 289 B1**
(45) Veröffentlichungstag und Bekanntmachung des Hinweises auf die Patenterteilung: **23.05.2012**
(21) Anmeldenummer: 08016953.5
(22) Anmeldetag: 26.09.2008
(51) Int. Cl.: F16L 5/02, F16L 5/10, H02G 3/22

(54) **Mauerkragen**
Sealing collar for openings through walls
Dispositif d'étancheité pour ouvertures dans les murs

(43) Veröffentlichungstag der Anmeldung: 31.03.2010
(73) Patentinhaber: Klinger AG, 6300 Zug (CH)
(72) Erfinder: Eisenach, Frank-Peter, 42929 Wermelskirchen (DE)
(74) Vertreter: Sparing Röhl Henseler

(56) Entgegenhaltungen:
- EP-A- 1 363 058
- DE-A1- 10 218 230
- DE-U1- 20 205 216
- FR-A- 2 703 753

## Beschreibung

Die Erfindung betrifft einen Mauerkragen nach dem Oberbegriff des Anspruchs 1.

Aus DE 201 20 639 U1 ist ein Mauerkragen zur Abdichtung von Rohren im Bereich der Durchführung durch Bauwerke, insbesondere durch Wände, Böden und Schächte, bei häufig anstehendem Grundwasser bekannt. Der Mauerkragen besteht aus einer ringförmigen, auf das Rohr aufziehbaren Manschette, deren Innendurchmesser an den Aussendurchmesser des Rohres anpassbar ist. An deren Außenseite ist wenigstens ein senkrecht vorstehender, insbesondere profilierter umlaufender Steg ausgebildet, mit dem der Mauerkragen in ein Bauwerk eingebunden wird. Um eine sichere Verbindung zwischen Mauerkragen und abzudichtendem Rohr herzustellen, ist ein Spannsystem vorgesehen, das aus mindestens einem Spannband besteht, das benachbart dem Steg um die Manschette gelegt und mittels Spannwerkzeugen straff gezogen wird. Die Manschette ist so auf dem abzudichtenden Rohr befestigbar.

Nachteilig ist, dass das Aufziehen des Mauerkragens von Hand auf ein Rohr in Abhängigkeit von der Beschaffenheit der Oberfläche des Rohrs Schwierigkeiten bereiten kann. Um das Aufschieben des Mauerkragens auf das Rohr in solchen Fällen zu erleichtern, ist die Verwendung von Neutralseife oder einer sonstigen Gleithilfe vorgesehen. Die Notwendigkeit solcher Montagehilfsmittel ist aufwendig.

Aus EP 1 363 058 B1 ist ein Mauerkragen bekannt, bei dem die Überschiebemuffe außenseitig auf beiden Seiten benachbart zum Dichtkragen mit einer umlaufenden Nut zur Aufnahme eines Spannbandes und an der Innenseite mit unmittelbar aneinander grenzenden Keilrippen versehen ist, die an den Muffenrändern eine Fase bilden. Ein solcher Mauerkragen besitzt eine erhöhte Formstabilität mit erhöhter Montagesicherheit und mit verbesserter Verankerung im Mauerwerk und Absperrsicherheit. Auch dieser Mauerkragen wird über das abzudichtende Rohr gesteckt und so platziert, dass er beim Einbau der Rohrleitung durch das Bauwerk dann korrekt im Mauerwerk sitzt, vorzugsweise in der Mitte des Mauerwerks. Das Rohr wird mit dem so platzierten Mauerkragen eingemauert. Der Mauerkragen verhindert eindringendes Wasser, welches entlang dem Rohrscheitel durch das nicht wasserdichte Mauerwerk dringt. Je nach Einsatzgebiet sind Gleithilfen als Montagehilfsmittel auch hier erforderlich.

Aus der DE 102 18 230 A1 ist eine Montagehilfe für eine Tülle für Leitungsdurchführungen bekannt. Diese umfasst einen Hohlkörper mit Kragen an beiden Enden. Der Hohlkörper umfasst einen Längsschlitz in axialer Richtung und weist gegenüber dem Längsschlitz ein Filmscharnier auf, wodurch die Montagehilfe aufklappbar ist. Ferner können im mittleren Bereich des Längsschlitzes zur Stabilisierung der Anordnung der Montagehilfe zwei miteinander verrastbare Elemente ausgebildet sein.

Aufgabe der Erfindung ist es, einen Mauerkragen zu schaffen, der einfacher montierbar ist.

Diese Aufgabe wird entsprechend den Merkmalen des Anspruchs 1 gelöst.

Hierdurch wird ein Mauerkragen geschaffen, der geöffnet und mit einem mechanischen Verschluss versehen ist. Das Aufziehen des Mauerkragens wird dadurch wesentlich vereinfacht, da der Mauerkragen wie ein Verschlusskragen um das abzudichtende Rohr gelegt und dort platziert werden kann, bevor der Mauerkragen verschlossen wird. Ferner kann ein solcher Mauerkragen über ein Rohrende gelegt werden, wo Flansche, T-Stücke oder andere Formteile angeformt, angeschweißt oder montiert wurden. Überraschenderweise wurde festgestellt, dass ein Verschluss unter Verwendung mindestens eines Krallenverbinders die Beibehaltung der Form eines Mauerkragens an der Innen- und Außenseite ermöglicht. Eine Längsöffnung des Mauerkragens quer zur Rohrachse an einer Stelle erlaubt ein Auseinanderklappen der geöffneten Enden des elastischen Mauerkragens, der nach dem Überstecken über ein Rohr wieder zusammengeklappt wird. Der Krallenverbinder liefert ein Verschlussprofil quer zur Rohrachse.

Vorzugsweise umfasst der Krallenverbinder an der Stirnseite des einen Endes mindestens einen Fortsatz mit einem Hinterschnitt, wie beispielsweise bei einem Schwalbenschwanz oder einem Omega-Profil.

Der Krallenverbinder besitzt vorzugsweise eine Eigensteifigkeit, wozu der Krallenverbinder in einem Radialabschnitt der Manschette des Mauerkragens vorgesehen ist, der zumindest teilweise in einen Sockelbereich des Dichtkragens ragt. Der Krallenverbinder ist in einem Umfangsabschnitt der Manschette des Mauerkragens vorgesehen der eine höhere Shore A Härte aufweist als der übrige Umfangsabschnitt der Manschette. Das härtere Material wirkt einem Auseinandergleiten der ineinandergreifenden Teile des Krallenverbinders entgegen.

Vorzugsweise ist der Mauerkragen aus einem elastomeren Material in einer Shore A Härte hergestellt, die es erlaubt, den Mauerkragen sehr leicht zu dehnen, um diesen in geöffnetem Zustand um das abzudichtende Rohr zu legen und durch Versetzen der Enden ein seitliches Einsetzen einer Kralle für eine gefügte Endverbindung, d.h. Zusammensetzen des Krallenverbinders, zu vereinfachen.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.
Fig. 1 zeigt schematisch eine seitliche Draufsicht eines Mauerkragens mit geöffneten Enden,
Fig. 2 zeigt den Mauerkragen gemäß Fig. 1 teilweise geschnitten,
Fig. 3 zeigt schematisch eine Draufsicht eines Teilbereiches des Mauerkragens mit verschlossenen Enden.

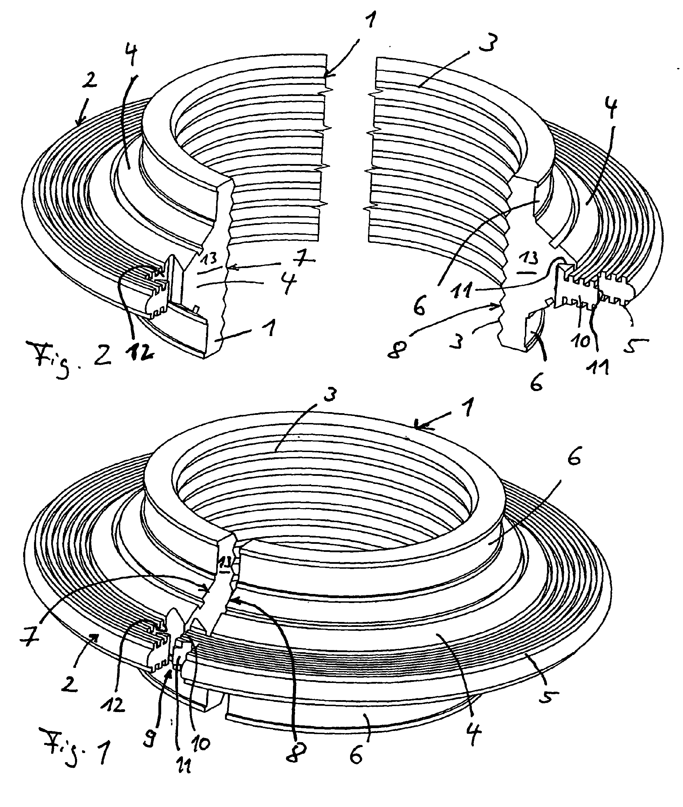

Der in den Fig. 1 bis Fig. 3 dargestellte Mauerkragen umfasst eine ringförmige, elastische Manschette mit einer Überschiebemuffe 1 und einen hieran angeformten radial nach außen sich erstreckenden flanschartigen Dichtkragen 2.

Die Überschiebemuffe 1 ist an der Innenfläche vorzugsweise mit einer Vielzahl Rippen 3 versehen. Die Rippen 3 sind hier im Schnitt dreieckige, unmittelbar aneinander grenzende Keilrippen. Alternativ können die Rippen 3 auch mit Abstand zueinander angeordnet sein, um eine labyrinthartige Dichtung an der Innenfläche der Überschiebemuffe 1 auszubilden. Die Rippen 3 besitzen eine relativ geringe Höhe von beispielsweise 2 bis 3 mm.

Der Dichtkragen 2 erstreckt sich radial nach außen vorzugsweise ausgehend von einem mittig an der Überschiebmuffe 1 angeformten Sockelbereich 4, der etwa dreieckig ausgebildet und nach außen gerichtet ist. Der Dichtkragen 2 besitzt beidseitig jeweils eine Reihe von konzentrisch mit Abstand zueinander angeordneten, umlaufenden, ringförmigen Verstärkungen 5. Die Verstärkungen 5 geben einen sicheren Halt des Dichtkragens 2 im Füllmaterial und lassen ein Eindringen von Feuchtigkeit, Grundwasser, etc. über den Mauerkragen nicht zu.

Die Überschiebemuffe 1 besitzt außenseitig auf beiden Seiten benachbart zum Dichtkragen 2 eine umlaufende Nut 6 zur Aufnahme eines nicht dargestellten Spannbandes.

Enden 7, 8 einer endlich ausgebildeten Manschette sind mechanisch verschließbar über mindestens einen Krallenverbinder 9 im Bereich des Dichtkragens 2 und unter Ausbildung einer durch Zusammensetzen gefügten Endverbindung.

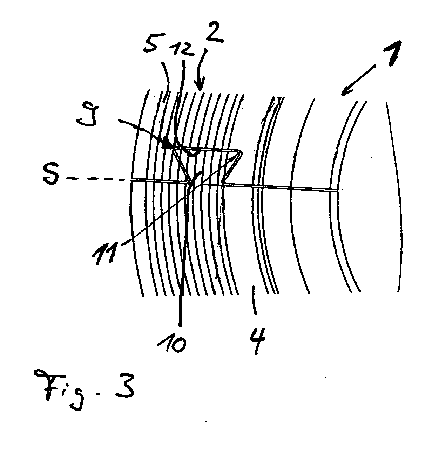

Der Krallenverbinder 9 umfasst an der Stirnseite 13 des einen Endes 8 mindestens einen Fortsatz 10 mit einem Hinterschnitt 11, der in Eingriff bringbar ist mit einer formangepassten stirnseitigen Ausnehmung 12 des anderen Endes 7. Der Fortsatz 10 ist ein Ausschnitt aus dem Dichtungskragen 2, der begrenzt ist auf ein radiales Teilstück, das durch eine Schnittlinie S (vgl. Fig. 3) mit einem Versatz im Bereich des Krallenverbinders 9 bestimmt wird. Benachbart zum Krallenverbinder 9 sind die Enden 7, 8 als Stoßflächen ausbildbar. Durch Fügen werden die beiden Enden 7, 8 miteinander verbunden, indem der Fortsatz 10 in die Ausnehmung 12 eingelegt bzw. eingehängt wird. Die beiden Enden 7, 8 werden dadurch zusammengesetzt. Der Krallenverbinder 9 kann dabei ein oder mehrere Fügestellen quer zur Längsachse bzw. in Radialrichtung aufweisen.

Die Verstärkungen 5 erstrecken sich auch über den Fortsatz 10 des Krallenverbinders 9, so dass insoweit auch der Halt im Füllmaterial und die Ablenkung anstehenden Wassers gewährleistet ist.

Gemäß Fig. 1 und Fig. 2 ist der Fortsatz 10 vorzugsweise schwalbenschwanzförmig ausgebildet. Der Fortsatz 10 kann beispielsweise auch ein Omega-Profil besitzen. Der Fortsatz 10 erstreckt sich radial vorzugsweise mindestens teilweise entlang einem Abschnitt des Sockelbereiches 4 des Dichtkragens 2. Gemäß Fig. 1 und Fig. 2 liegt beispielsweise ein Hinterschnitt im Sockelbereich 4 bei einem geschlossenen Mauerkragen.

Die Manschette des Mauerkragens weist im Bereich der Enden 7, 8 jeweils einen Umfangsabschnitt mit einer höhere Shore A Härte auf als die Manschette im Übrigen. Die Manschette des Mauerkragens weist im Bereich der Enden 7, 8 vorzugsweise eine Härte im Bereich von 60° bis 80° Shore A auf, während die Manschette im Übrigen eine Härte im Bereich von 35° bis 50° Shore A aufweist.

Die Manschette des Mauerkragens besteht aus einem elastomeren Material, insbesondere Ethylen-Propylen-Elastomer (EPDM), Polyethylen (PEHD) oder Polypropylen (PP). Die Manschette des Mauerkragens ist vorzugsweise aus extrudiertem Material gepresst. Die Enden 7, 8 und der Krallenverbinder 9 können auch durch ein Schnittwerkzeug aus einer extrudierten, ursprünglich geschlossenen Manschette hergestellt werden.

Die erfindungsgemäße Manschette des Mauerkragens lässt sich vorzugsweise sehr leicht dehnen, so dass die ringförmige, durch einen Radialschnitt endlich geformte Manschette im geöffneten Zustand um ein abzudichtendes Rohr gelegt und platziert werden kann. Nach dem Überstecken über ein Rohr wird die Manschette wieder zusammengeklappt und im Bereich des Radialschnittes der Krallenverbinder 9 zusammengesetzt, wodurch die Enden 7, 8 miteinander in Eingriff gebracht und die Manschette geschlossen ist. Dies verdeutlicht insbesondere Fig. 3. Die Schnittlinie S verspringt im Bereich des Krallenverbinders 9.

## Patentansprüche

1. Mauerkragen umfassend eine ringförmige, elastische Manschette mit einer Überschiebemuffe (1) und einem hieran angeformten radial nach außen sich erstreckenden flanschartigen Dichtkragen (2) mit einer Vielzahl von auf beiden Seiten hiervon angeordneten ringförmigen Verstärkungen (5), und die Überschiebemuffe (1) außenseitig auf beiden Seiten benachbart zum Dichtkragen (2) mit einer umlaufenden Nut (6) zur Aufnahme eines Spannbandes versehen ist, **dadurch gekennzeichnet, dass** Enden (7, 8) der durch einen Radialschnitt endlich ausgebildeten Manschette mechanisch verschließbar sind über mindestens einen Krallenverbinder (9) im Bereich des Dichtkragens (2) und unter Ausbildung einer durch Zusammensetzen gefügten Endverbindung, wobei der Mauerkragen den Krallenverbinder (9) umfasst, und die Manschette im Bereich der Enden (7, 8) jeweils einen Umfangsabschnitt mit einer höheren Shore A Härte aufweist als die Manschette im übrigen Bereich des Umfangs.

2. Mauerkragen nach Anspruch 1, **dadurch gekennzeichnet, dass** der Krallenverbinder (9) an der Stirnseite (13) des einen Endes (8) mindestens einen Fortsatz (10) mit einem Hinterschnitt (11) aufweist, der in Eingriff bringbar ist mit einer formangepassten stirnseitigen Ausnehmung (12) des anderen Endes (7).

3. Mauerkragen nach Anspruch 2, **dadurch gekennzeichnet, dass** der Fortsatz (10) schwalbenschwanzförmig ausgebildet ist.

4. Mauerkragen nach Anspruch 2 oder 3, **dadurch gekennzeichnet, dass** der Fortsatz (10) sich mindestens teilweise entlang eines Sockelbereiches (4) des Dichtkragens (2) radial erstreckt.

5. Mauerkragen nach einem der Ansprüche 1 bis 4, **dadurch gekennzeichnet, dass** die Manschette im Bereich der Enden (7, 8) eine Härte im Bereich von 60° bis 80° Shore A aufweist, während die Manschette im Übrigen eine Härte im Bereich von 35° bis 50° Shore A aufweist.

6. Mauerkragen nach einem der Ansprüche 1 bis 5, **dadurch gekennzeichnet, dass** die Manschette aus einem elastomeren Material, insbesondere Ethylen-Propylen-Elastomer (EPDM), Polyethylen (PEHD) oder Polypropylen (PP) besteht.

7. Mauerkragen nach einem der Ansprüche 1 bis 6, **dadurch gekennzeichnet, dass** die Überschiebemuffe (1) mit an ihrer Innenfläche angeordneten Rippen (3) ausgebildet ist.

8. Mauerkragen nach einem der Ansprüche 1 bis 7, **dadurch gekennzeichnet, dass** die Manschette aus extrudiertem Material gepresst ist.

## Claims

1. Wall collar comprising an annular, elastic sleeve with a slip-on coupling (1) and a radially outward extending flange-like sealing collar (2) formed on it with multiple annular braces (5) arranged on both sides thereof, and the slip-on coupling (1) being provided on the outside on both sides adjacent to the sealing collar (2) with a peripheral groove (6) for receiving a clamping band, **characterized in that** ends (7, 8) of the sleeve formed at the ends by a radial cut can be mechanically closed by means of at least one claw-type connector (9) in the region of the sealing collar (2) and thereby form an end connection joined by being fitted together, the wall collar enclosing the claw-type connector (9), and the sleeve having respectively in the region of the ends (7, 8) a circumferential portion with a higher Shore A hardness than the sleeve in the rest of the circumference.

2. Wall collar according to Claim 1, **characterized in that** the claw-like connector (9) has on the end face (13) at one end (8) at least one continuation (10) with an undercut (11), which can be brought into engagement with a shape-adapted end-face recess (12) of the other end (7).

3. Wall collar according to Claim 2, **characterized in that** the continuation (10) is formed in a dovetail shape.

4. Wall collar according to Claim 2 or 3, **characterized in that** the continuation (10) extends radially at least part of the way along a base region (4) of the sealing collar (2).

5. Wall collar according to one of Claims 1 to 4, **characterized in that** the sleeve has in the region of the ends (7, 8) a hardness in the range from 60 ° to 80° Shore A, while the sleeve otherwise has a hardness in the range from 35° to 50° Shore A.

6. Wall collar according to one of Claims 1 to 5, **characterized in that** the sleeve consists of an elastomeric material, in particular ethylenepropylene elastomer (EPDM), polyethylene (HDPE) or polypropylene (PP).

7. Wall collar according to one of Claims 1 to 6, **characterized in that** the slip-on coupling (1) is formed with ribs (3) arranged on the inner surface thereof.

8. Wall collar according to one of Claims 1 to 7, **characterized in that** the sleeve is pressed from extruded material.

## Revendications

1. Dispositif d'étanchéité pour ouvertures dans les murs comprenant un manchon annulaire, élastique avec un manchon coulissant (1) et un collet (2) d'étanchéité formé sur celui-ci, en forme de bride et s'étendant radialement vers l'extérieur avec une multiplicité de renforts (5) circulaires disposés sur ses deux côtés, et le manchon coulissant (1) étant doté d'une rainure (6) périphérique destinée à recevoir un collier de serrage à l'extérieur sur les deux faces adjacentes au collet (2) d'étanchéité, **caractérisé en ce que** les extrémités (7, 8) du manchon constitué à l'extrémité d'une coupe radiale peuvent être fermées mécaniquement via au moins une fixation (9) à pattes dans la zone du collet (2) d'étanchéité et en formant une liaison d'extrémité par assemblage, le dispositif d'étanchéité pour ouvertures dans les murs comprenant la fixation (9) à pattes et le manchon comprenant dans la zone des extrémités (7, 8) respectivement un segment périphérique possédant une dureté Shore A supérieure au manchon dans la zone restante de la circonférence.

2. Dispositif d'étanchéité pour ouvertures dans les murs selon la revendication 1 **caractérisé en ce que** la fixation (9) à pattes comporte sur la face frontale (13) de l'une extrémité (8) au moins un prolongement (10) doté d'une contre-dépouille (11) qui peut venir en prise avec un évidement (12) frontal de forme adaptée de l'autre extrémité (7).

3. Dispositif d'étanchéité pour ouvertures dans les murs selon la revendication 2 **caractérisé en ce que** le prolongement (10) a une forme en queue d'aronde.

4. Dispositif d'étanchéité pour ouvertures dans les murs selon les revendications 2 ou 3 **caractérisé en ce que** le prolongement (10) s'étend au moins en partie le long d'une zone (4) de socle du collet (2) d'étanchéité.

5. Dispositif d'étanchéité pour ouvertures dans les murs selon l'une des revendications 1 à 4 **caractérisé en ce que** le manchon possède une dureté située dans une plage de 60° à 80° Shore A dans la zone des extrémités (7, 8) tandis que le reste du manchon possède une dureté située dans une plage de 35° à 50° Shore A.

6. Dispositif d'étanchéité pour ouvertures dans les murs selon l'une des revendications 1 à 5 **caractérisé en ce que** le manchon se compose d'un matériau élastomère, en particulier d'éthylène-propylène-diène monomère (EPDM), de polyéthylène (PEHD) ou de polypropylène (PP).

7. Dispositif d'étanchéité pour ouvertures dans les murs selon l'une des revendications 1 à 6 **caractérisé en ce que** le manchon coulissant (1) est constitué de nervures (3) disposées sur sa face intérieure.

8. Dispositif d'étanchéité pour ouvertures dans les murs selon l'une des revendications 1 à 7 **caractérisé en ce que** le manchon est pressé à partir d'un matériau extrudé.
